# EUROPEAN PATENT APPLICATION

(11) **EP 1 511 299 A1**
(43) Date of publication of application: **02.03.2005**
(21) Application number: 04077327.7
(22) Date of filing: 16.08.2004
(51) Int. Cl.: H04N 5/225

(54) **Cam-driven multiple-view imaging system**

(30) Priority: 29.08.2003 US 652987
(71) Applicant: Delphi Technologies, Inc., Troy, MI 48007 (US)
(72) Inventor: Harter, Joseph E., Jr., Kokomo Indiana 46902 (US); Scharenbroch, Gregory K., Kokomo Indiana 46901 (US); Taylor, Ronald M., Greentown, IN 46936 (US)
(74) Representative: Denton, Michael John

(57) **Abstract**

An improved imaging system includes a single solid state interlaced imager device (12) such as a CCD camera chip, a displaceable mirror apparatus (14), and a controller (18) for displacing the mirror apparatus (14) in synchronism with the capture of video information by the imager device (12) so as to obtain interlaced video information from multiple selected views. The mirror apparatus (14) comprises a linearly displaceable shaft (26) supporting two or more axially separated mirror surfaces (20, 24) and a motor-operated cam drive (16, 28, 60, 58) for reciprocatingly displacing the shaft (26) to successively bring the mirrors (20, 24) into an aperture field of the imager device (12).

## Description

### Technical Field

The present invention relates to an imaging system adapted to capture video information pertaining to more than one image.

### Background of the Invention

Imaging systems are finding increased application in non-traditional environments. In the automotive environment, for example, imaging systems are being proposed not only for the purpose of displaying various images to the driver, but also for data collection relevant to occupant detection, obstacle detection, pre-crash sensing, and so on. However, it has become apparent that utilizing multiple individual imaging systems is cost prohibitive in most applications, and is frequently unacceptable from a packaging standpoint. Accordingly what is needed is an improved imaging system that is easily packaged in an automotive environment, and that has the capability of capturing video information from multiple images.

### Summary of the Invention

The present invention is directed to a multiple view imaging system including a single solid state interlaced imager device such as a CCD camera chip, a novel multiple view mirror apparatus, and a controller for operating the mirror apparatus in synchronism with the capture of video information by the imager device so as to obtain interlaced video information from multiple views. The mirror apparatus comprises a linearly displaceable shaft supporting two or more axially separated mirror surfaces and a motor-operated cam drive for reciprocatingly displacing the shaft to bring a selected mirror into an aperture field of the imager device.

### Brief Description of the Drawings

Figure 1A is a diagram of an imaging system according to this invention, including an interlaced imaging device, a multiple view mirror apparatus, and a controller for positioning the mirror apparatus in synchronism with the capture of video information by the imaging device.
Figure 1B schematically depicts a portion of the mirror apparatus of Figure 1 for a two-view mechanization of the invention.
Figure 1C schematically depicts a portion of the mirror apparatus of Figure 1 for a four-view mechanization of the invention.
Figure 2 is a diagram of the mirror apparatus of Figure 1 for a two-view mechanization of the invention.
Figure 3, Graphs A and B, depict a mirror control carried out by the controller of Figure 1.

### Description of the Preferred Embodiment

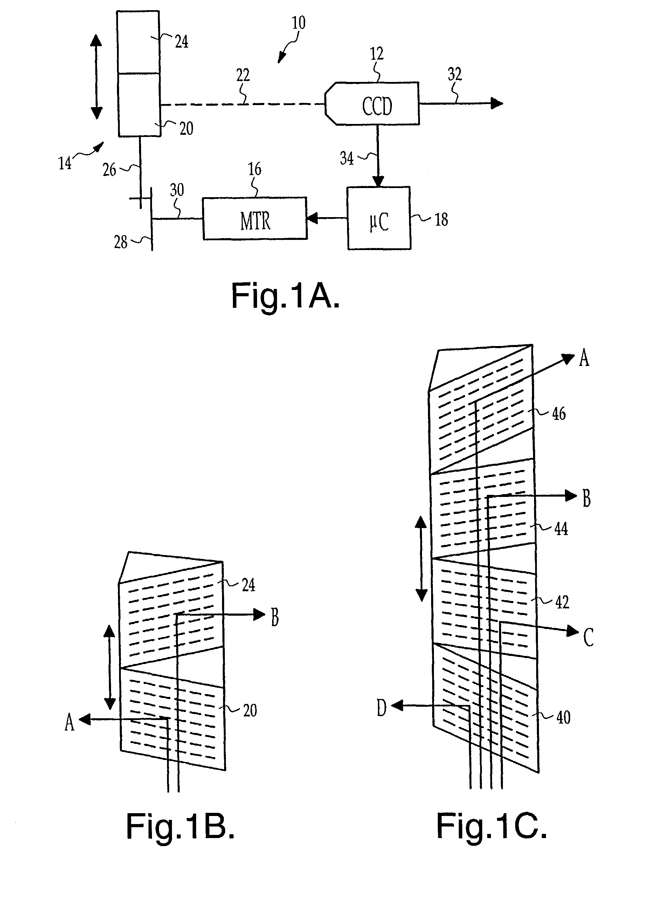

While the imaging system of the present invention is described herein in the context of a motor vehicle, it will be appreciated that various non-automotive applications are also possible. Referring to Figure 1A, the reference numeral 10 generally designates a two-view imaging system according to this invention. The imaging system 10 includes a solid state interlaced imaging device 12 such as a CCD or CMOS camera chip, a mirror apparatus 14 positioned by an electric motor 16, and a controller (µC) 18 responsive to an internal vertical sync signal of imaging device 12 for appropriately positioning the mirror apparatus 14. In the illustrated embodiment, the controller 18 reciprocates the mirror apparatus 14 between two alternate imaging positions. The aperture field of the imaging device 12 is aligned (as indicated by the broken line 22) with a first mirror 20 when the apparatus 14 is in the illustrated imaging position, whereas the aperture field of the imaging device 12 is aligned with a second mirror 24 when the apparatus 14 is in the alternate imaging position. The mirrors 20 and 24 are affixed to a linearly displaceable shaft 26, and the shaft 26 is mechanically coupled to a rotary cam mechanism 28 that is driven by the output shaft 30 of electric motor 16. Thus, continuous energization of the motor 16 by controller 18 produces axial reciprocation of the shaft 26 and mirrors 20, 24 to alternately align the mirrors 20, 24 with the aperture field of the imaging device 12. The imaging device 12 provides a video output on line 32 which may be supplied to a display or video processor, as the particular application requires, and the vertical sync signal is provided to the controller 18 via line 34.

The mirrors 20, 24 provide different angles of reflection for light incident to the imaging device 12 so that the imaging device 12 alternately produces video data from first and second scenes corresponding to the two different mirror angles. Figure 1B depicts an exemplary mirror orientation, as seen by the imaging device 12. In such depiction, the mirror 20 provides a left-facing view as indicated by the arrow A, and the mirror 24 provides a right-facing view as indicated by the arrow B. Of course, the mirror angles will be designed to suit a particular application, and may include vertical angulation as well as the depicted horizontal angulation. Also, the number of mirrors is not limited to two; in this regard, Figure 1C depicts an exemplary mirror orientation for an embodiment including four mirrors 40, 42, 44, 46 that provide four different views to the imaging device 12. In the four mirror implementation, reciprocal linear displacement of the shaft 26 successively brings four different views (A, B, C, D) into alignment with the aperture field of imaging device 12.

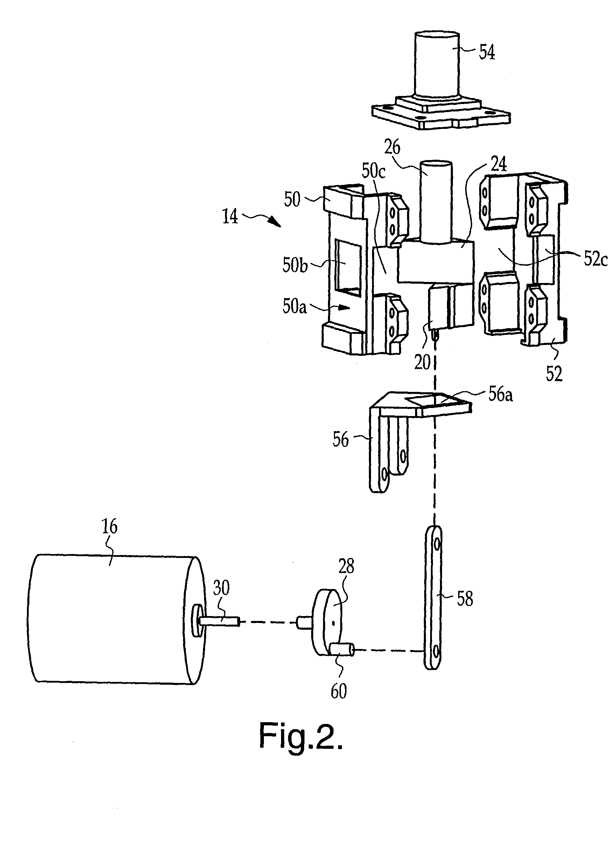

Figure 2 depicts a mechanization of the mirror apparatus 14 for a two view application in which the mirrors 20, 24 are mutually deflected by 90 degrees, each mirror 20, 24 being deflected from the aperture field of imaging device 12 by 45 degrees. In such an embodiment, the imaging device 12 receives incident light from scenes to the right and left of its aperture field. Referring to Figure 2, the mirrored shaft 26 is enclosed by a housing comprising first and second housing halves 50 and 52 and the domed cover 54. The housing pieces 50, 52, 54 are fastened together as indicated, and coupled to the housing of electric motor 16 by a motor mount 56. One end of the shaft 26 is supported by the domed portion of cover 54, and other end of shaft 26 is coupled to the electric motor output shaft 30 by a connecting arm 58 and a crank arm 60 of cam mechanism 28. The connecting arm 58 passes through an opening 56a in motor mount 56, and the opening 56a is shaped to accommodate movement of the mirror 20. The housing half 50 has an apertured side surface 50a designed to accommodate a circuit board (not shown), and the CCD imaging device 12 is mounted on the circuit board to receive incident light through the aperture 50b. The sides of housing halves 50, 52 are slotted as indicated by the reference numerals 50c, 52c to form opposing apertures that are laterally aligned with the aperture 50b. Incident light enters the opposing apertures, and incident light entering one of the opposing apertures is reflected to the imaging device 12 via a mirror 20, 24 and the aperture 50b. When the shaft 26 is retracted as shown in Figure 2, light entering the housing aperture in the foreground of the drawing is reflected to the imaging device 12 by the mirror 24, and when the shaft is extended, light entering the housing aperture in the background of the drawing is reflected to the imaging device 12 by the mirror 20.

Obviously, various mechanizations other than described above are possible. But in any event, the controller 18 coordinates mirror movement with the data capture of the imager device 12 so that at least two images are interlaced in a single video frame. Thus, whereas a traditional video frame contains interlaced even-numbered and odd-numbered rows of pixels that contain substantially similar information and are alternately integrated at a fixed periodicity and then read out to a capture device, a video frame according to the present invention contains interlaced even-numbered and odd-numbered rows of pixels in which the even-numbered rows contain information from one view and the odd-numbered rows contain information from an entirely different view.

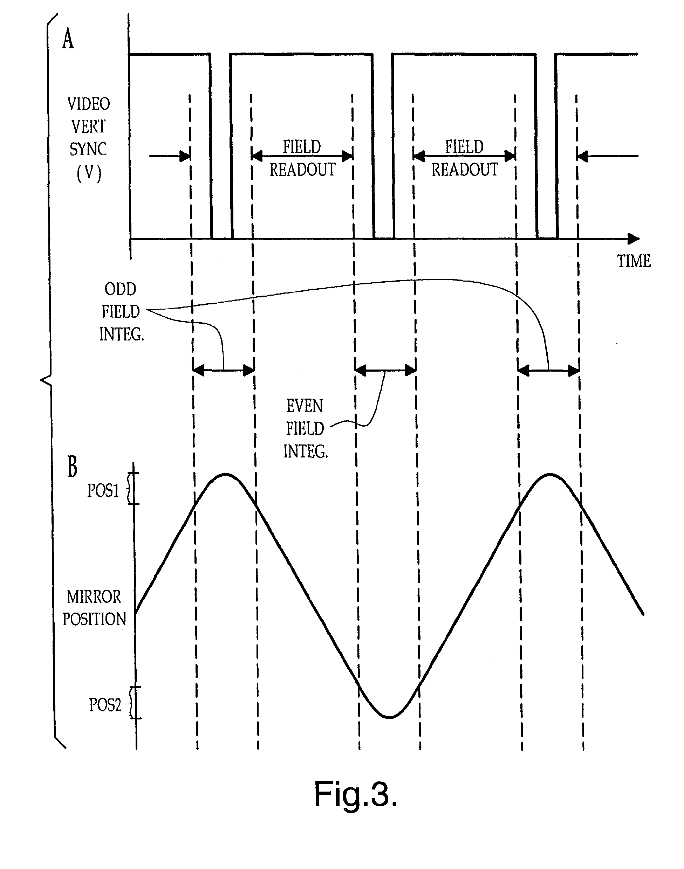

A typical implementation is depicted in Graphs A and B of Figure 3, where Graph A depicts a vertical sync pulsetrain (V) and Graph B depicts the movement of the mirrored shaft 26, both as a function of time. The vertical sync pulses initiate the alternate row pixel integration process every 16.66ms for an information capture rate of 30 frames per second, and the obtained video data is read out to the capture device in a field readout period between sync pulses as indicated. As indicated in Graph B, the shaft movement is continuous and in synchronism with the pixel integration rate, with the mirrors 20, 24 being alternately in position during the field integration periods, and out of position during the field readout periods. For the mechanization of Figure 2 for example, mirror 20 is in position (POS1) relative to the respective housing apertures during odd field pixel integration, and the mirror 24 is in position (POS2) during even field pixel integration. In this way, two (or more) different views can be captured in a single video frame with no sacrifice with respect to the frame rate of the interlaced imager 12, regardless of the angular separation of the views.

In summary, the present invention provides an imaging system that is capable of capturing video information pertaining to two or more different views with a single interlaced imaging device without degrading its frame rate. While described in reference to the illustrated embodiments, it is anticipated that various modifications in addition to those mentioned above will occur to those skilled in the art. For example, the views may be entirely different as shown, or may be segments of a single view (in which case subsequent processing may be used to combine the two views into a single wide angle view). Accordingly, it will be understood that imaging systems including these and other modifications may fall within the scope of this invention, which is defined by the appended claims.

## Claims

1. An imaging system, comprising:
an interlaced imaging device (12);
a mirrored shaft (14) that is axially displaceable for presenting different views to said imaging device (12);
drive means (16, 26, 28, 30) including an electric motor (16) for reciprocatingly displacing said mirrored shaft (14) to change the view presented to said imaging device (12); and
control means (18) for controlling said electric motor (16) in response to a data acquisition control signal (34) of the imaging device (12) such that interlaced video data produced by said imaging device (12) includes data pertaining to two or more different views.

2. The imaging system of Claim 1, wherein said data acquisition control signal (34) is a vertical synchronization control signal that coordinates readout of said video data.

3. The imaging system of Claim 2, wherein said mirrored shaft (14) includes first and second axially separated mirrors (20, 24) that are alternately in position with respect to said imaging device (12) during successive data acquisition periods of said imaging device (12).

4. The imaging system of Claim 1, wherein said drive means includes a rotary cam mechanism (28, 60) driven by said electric motor (16) and a connecting arm (58) coupling said cam mechanism (28, 60) to said mirrored shaft (14).

5. The imaging system of Claim 4, wherein said control means (18) continuously drives said electric motor (16) at a speed that is in synchronism with said data acquisition control signal.
